Europäisches Patentamt

European Patent Office

Office européen des brevets

(11) Publication number: **0 350 615**
A2

# EUROPEAN PATENT APPLICATION

(21) Application number: **89110119.8**

(22) Date of filing: **05.06.89**

(51) Int. Cl.4: **B60L 11/12 , B64F 5/00**

(30) Priority: **13.07.88 IT 2134388**

(43) Date of publication of application:
**17.01.90 Bulletin 90/03**

(34) Designated Contracting States:
**DE ES FR GB**

(71) Applicant: SIMAI S.p.A.
Via per Civesio, 10
I-20097 S. Donato Milanese (Mi)(IT)

(72) Inventor: Garegnani, Luigino
Via per Civesio, 10
I-20097 S.Donato Milanese, MI(IT)

(74) Representative: Trupiano, Roberto
BREVETTI EUROPA S.r.l. Piazza Bernini, 6
I-20133 Milano (MI)(IT)

(54) Self-propelled, electricity generating, hybrid tractor for airport services, for checking the on-board aircraft equipment and for starting-up the aircraft engines.

(57) Electricity generating tractor for various airport services, constituted by an electric-drive car on whose platform a driver's cabin is positioned in its front side, which driver's cabin is provided with control and check instruments, and in its rear side a generator is installed, which consists of a Diesel engine driving a three-phase alternator equipped with a suitable rectifier in order to supply the direct current necessary for causing said car to move, for checking the on-board aircraft instruments from ground level, and for starting up the turbine engines of the aircrafts.

Alongside said generator groups of electrical batteries are installed, which are automatically connected with said generator in order to act as back-up batteries; said back-up batteries are suitable for directly powering the car drive motors, and for supplying the necessary electrical energy for starting up the turbine engines of the aircrafts, and for carrying out the on-board checks in all cases of stopping of said generator.

FIG. 1

## SELF-PROPELLED, ELECTRICITY GENERATING, HYBRID TRACTOR FOR AIRPORT SERVICES, FOR CHECKING THE ON-BOARD AIRCRAFT EQUIPMENT AND FOR STARTING-UP THE AIRCRAFT ENGINES

The object of the present invention is an electricity generating tractor, of the electric-drive type, for carrying out several airport services, and in particular for the towage of helicopters and of aircrafts along the taxiways and the strips, for the ground-level check of the on-board aircraft instruments, both on taxiways and inside the hangars, and for the starting up of the turbine engines of the same aircrafts.

It is well known that among the many types of airport services, particularly important are those which relate to the towage of the aircrafts, in particular of the helicopters and of the light aircrafts from the hangars and sheds to the taxiways and strips and vice-versa, to the ground-level check of the on-board instruments of the aircrafts, and to the starting up of the turbine engines of the same aircrafts.

At present, in order to tow the aircrafts, electrical-drive, battery-powered tractors are used, which are equipped with electronic speed control systems, and in the practice are handeable, soundless, and do not cause pollution, but which unfortunately show an operational service autonomy obviously limited by the charge stored by the batteries.

For the starting up of aircraft engines, and the ground-level check of the on-board instruments of the same aircrafts, generators are used on the contrary, which supply a direct current (e.g., at a voltage of 28 V), which are installed on cars, generally of trailer type. Said generators are normally constituted by a Diesel-cycle engine, which drives a generator supplying a direct current.

Therefore, for the airport services two distinct machines are used which, besides having considerable overall dimensions, require the attendance by suitable staff capable of coping with their individual performances, as well as considerable manoeuvering surface areas during the towage of the electricity generator. Furthermore, the limited operating autonomy of the electric-drive tractor can cause unexpected stops to occur during the towage, with a consequent time waste, and the generator, in case of a fortuitous stop during the aircraft turbine engine starting up, may cause severe damages to the same turbines of the aircraft.

The purpose of the present invention is of providing an electricity-generating tractor of the electric-drive type, having such a structure as to combine in one single self-propelled, compact unit with small overall dimensions, the functions of towage of the aircrafts, of starting up of the turbine engines of said aircrafts, and of check at ground-level of the on-board aircraft equipment, by using the diret current supplied by a generator, in order to also perform, besides the on-board instrument checks and the turbine starting up, the powering of the drive motors of the same unit, and the recharging of the batteries powering said drive motors.

Another purpose of the present invention is of providing a self-propelled, electricity-generating tractor which is suitable for indoor use under safe environmental conditions, in that it is designed to operate by means of batteries only, both for towage services and for instrument check operations.

A further purpose of the present invention is of providing a tractor of the above specified type, which is capable of operating outdoor, outside hangars, sheds, and the like, with a long operational autonomy, only limited by the refueling of the engine of the generator, still as an electric-drive vehicle with electronic speed control, as well as such as to secure the towage service in case of a fortuitous malfunctioning of the electricity generator.

A not least purpose of the present invention is of providing a hybrid, or polyfunctional, electricity-generating tractor, having such a structure as to operate within small manoeuvering surface areas, with the attendance by a reduced staff, placed under highly comfortable conditions.

These and still other purposes, which are evidenced in greater detail by the following disclosure, are achieved by means of a hybrid electricity generating tractor of the electric-drive car type, for various airport services and in particular for the towage of the aircrafts, the ground-level check of their on-board equipment and for starting up their turbines, which tractor is constituted, according to the present invention, by an electric-drive car with electronic speed control, on whose platform a driver's cabin is positioned at its front side, which driver's cabin is provided with control and check instruments, and at its rear side a generator is installed, which consists of a Diesel engine driving a three-phase alternator equipped with a suitable rectifier in order to supply the direct current necessary for causing said car to travel, for checking the on-board aircraft instruments from ground level, and for starting up the turbine engines of the aircrafts, with alongside said generator groups of electrical batteries being installed, which are automatically connected with said generator in order to act as back-up batteries; said back-up batteries being suitable for directly powering the car drive motors, and for supplying the necessary electrical energy for starting up the turbine engines of the aircrafts, and for carrying out the on-board checks in all cases of a stop of said generator.

More particularly, said generator uses a three-phase alternator provided with a double regulator system, i.e., an electronic regulator system and an amperometric regulator system, which is capable of supplying, through a rectifier bridge based on high-power diodes, a direct current at a voltage of 28 V with current absorptions, in case of turbine engine starting up, of up to 1200 A at the starting, without causing any appreciable voltage drops.

The present invention is now disclosed in greater detail according to one of its possible forms of practical embodiment, by referring to the hereto attached drawing tables, given for the purpose of merely illustrating the invention without limiting it, wherein:

Figure 1 shows, in a schematic form, a side view of an electricity-generating electro-Diesel tractor, accomplished according to the present invention;

Figure 2 shows a plan view of the tractor of Figure 1, and

Figures 3 and 4 show, as block diagrams, the possibility of using the tractor according to the present invention, respectively outdoor (i.e., outside hangars and sheds) and indoor, or in case of a fault of the electricity generator.

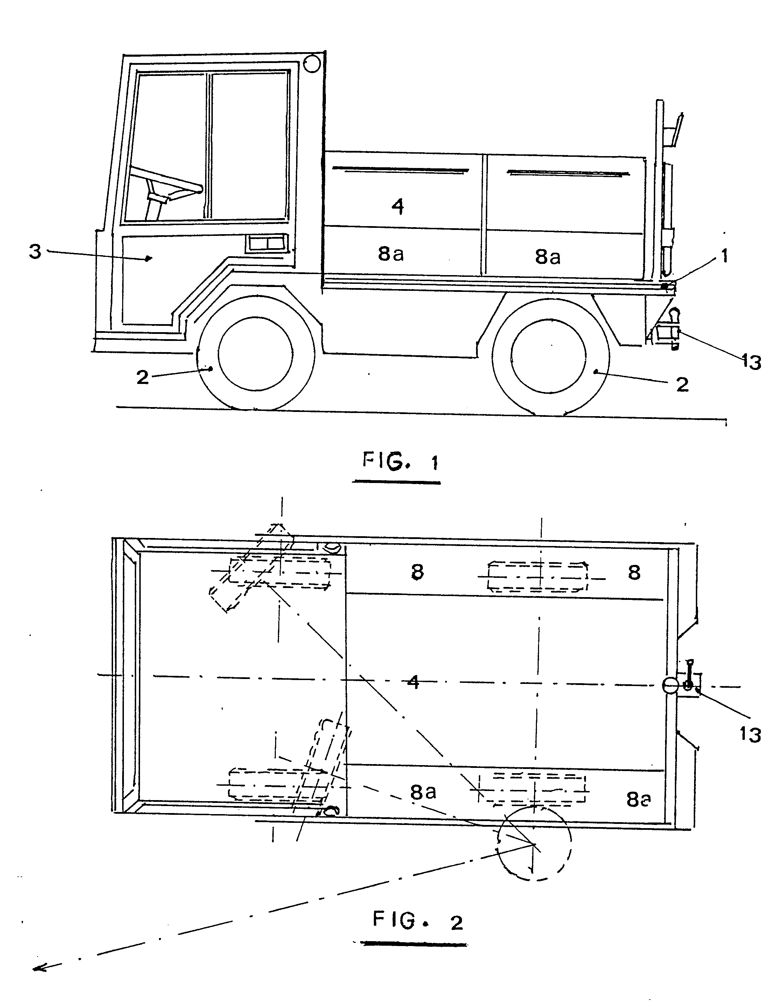

Referring to the above figures, and in particular to Figures 1 and 2, the tractor according to the present invention is substantially constituted by a car formed by a load-bearing chassis 1, made from structural metallic profiles, mounted on four wheels 2, with two front wheels from said four wheels being guide wheels and two rear wheels from said four wheels being drive wheels, with the relevant differential, driven by direct-current electrical motors and relevant reduction gear; these latter are not depicted in the dreawings, in that they are of type known from the prior art.

On the platform formed by the chassis 1 a driver's cabin 3 of closed type is provided at the front side, inside which driver's cabin the instruments are installed, which are necessary for governing and controlling the electricity generating equipment instablled behind the driver's cabin 3. On the same platform, behind said driver's cabin, an electricity generator unit of electro-Diesel type is in fact installed; more precisely, said generator unit, generally indicated by the reference numeral 4, is constituted by a Diesel engine 5 which drives a three-phase alternator 6 of four-pole, brushless type, which is capable of supplying a direct current of 20 kVA at 28 V, for use at up to 3000 metres of altitude; such an alternator is equipped with an electronic regulating system and with an amperometric regulating system, which are capable of securing the regulation precision, as well as the containment of the voltage drop during the transient step. With the alternator a rectifier 7, based on high-power silicon-diodes is then associated. The continuous voltage at output terminals is of 28 V and the peak current can be regulated at values comprised within the range of from 120 to 1200 A, by means of a potentiometer. Alongside said generator two bodies 8-8a are then provided, which contain groups of 24 V batteries, which are automatically connected with the generator to act as back-up batteries, in a known way.

Therefore, the batteries are so connected as to remain under charging conditions during the operation of the generator, as well as to power the drive motor of the car 9, provided with an electronic speed regulator 10. An automatic system is provided as well in order to limit the current supplied to the batteries 8-8a, so as to prevent them from being damaged. Obviously, the tractor is also provided with a normal towing hook 13 (Figure 2), with a service brake and a parking brake, as well as with lights and, at its rear side, with a pushbutton panel, for the slow actuation of the self-propelled car, in order to facilitate the hooking of the trailers to be towed.

Substantially, the tractor according to the present invention is a self-propelled unit of small overall dimensions, which is capable of securing the soft towage to be performed of helicopters and of aircrafts, and of supplying the necessary electrical current for the service of ground-level check of the on-board aircraft instruments and for the starting up of the aircraft turbine engines.

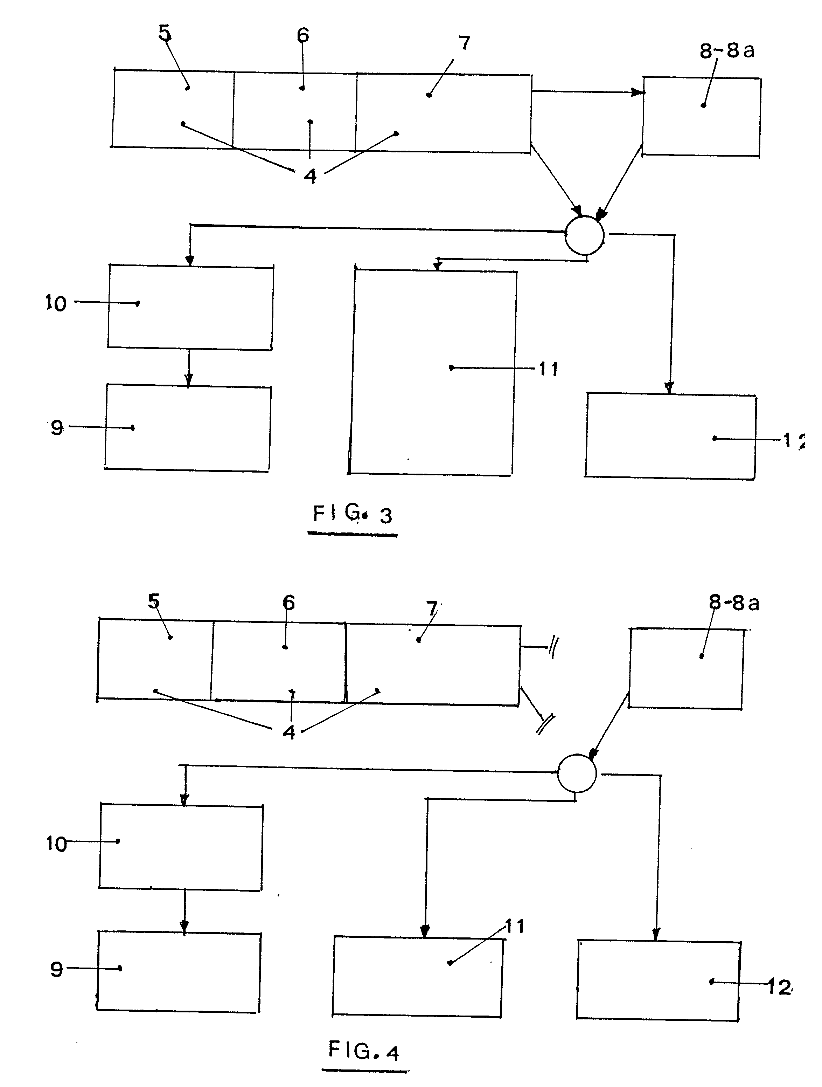

As the block diagram of Figure 3 clearly shows, the batteries 8-8a, during the towage, remain under charge by the generator, and can supply the current for the ground-level checks 11 and for the turbine starting up 12. The use of batteries connected in back-up mode with the generator unit makes also possible the same batteries to perform an action of filtering of the residue of alternating wave, the so-said "ripple", generated by the alternator, as well as of protecting the turbines from irreparable damages during the starting up, in case of an instantaneous stop of the generator.

The block diagram of Figure 4 evidences the case of an either fortuitous or intentional stop of the generator. In this case, the batteries 8-8a are capable of making it possible the towage to be carried out, even if for a short time (such as, e.g., in case of a stop of the Diesel engine), and also the necessary electrical current for checking the on-board aircraft instruments and, whenever necessary, also the necessary electrical current for the starting up of the turbine engines, to be duly supplied.

From the above, it clearly results that the tractor according to the present invention can be used within closed rooms (indoor use), with the generator being kept stationary, with self-explanatory advantages as regards the compliance with the pollution preventing regulations.

Obviously, when practiced, the present invention as hereinabove disclosed can be supplied with modifications, variants and adaptations to any particular use requirements, without departing from the scope of protection of the same invention.

Claims

1. Hybrid electricity generating tractor of the electric-drive car type for various airport services, characterized in that said tractor is constituted by an electric-drive car on whose platform a driver's cabin is positioned at its front side, which driver's cabin is provided with control and check instruments, and at its rear side a generator is installed, which consists of a Diesel engine driving a three-phase alternator equipped with a suitable rectifier in order to supply the direct current necessary for causing said car to move, for checking the on-board aircraft instruments from ground level, and for starting up the turbine engines of the aircrafts, with alongside said generator groups of electrical batteries being installed, which are automatically connected with said generator in order to act as back-up batteries; said back-up batteries being suitable for directly powering the car drive motor, and for supplying the necessary electrical current for starting up the turbine engines of the aircrafts, and for carrying out the on-board checks in all cases of stopping of said generator.

2. Tractor according to claim 1, characterized in that said generator is capable of supplying a direct current at 28 V with current absorptions of up to 1200 A without any appreciable voltage drops.

3. Tractor according to claim 1, characterized in that said batteries acting as the back-up batteries for said generator perform an action of filtration of the residue of alternating wave generated by said rectifier (ripple), as well as a protecting action against damages to the turbines during the starting up step, in case of an instantaneous stop of the generator.

4. Tractor according to the preceding claims, characterized in that it can be used in order to perform all of its functions inside closed rooms also (indoor use), with the generator being kept stationary.

FIG. 1

FIG. 2

FIG. 3

FIG. 4